# EUROPEAN PATENT SPECIFICATION

(11) **EP 1 311 365 B1**
(45) Date of publication and mention of the grant of the patent: **19.12.2007**
(21) Application number: 01958323.6
(22) Date of filing: 31.07.2001
(51) Int. Cl.: B23C 5/10, B23B 31/11

(54) **CUTTING TOOL ASSEMBLY**
SCHNEIDWERKZEUG-ANORDNUNG
ENSEMBLE OUTIL TRANCHANT

(30) Priority: 18.08.2000 IL 13794500
(43) Date of publication of application: 21.05.2003
(73) Proprietor: Iscar Ltd., 24959 Tefen (IL)
(72) Inventor: HARPAZ, Jacob, 25147 Tefen (IL); SATRAN, Amir, 25147 Tefen (IL); PETRILIN, Andrei, 28012 Qiryat Ata (IL)
(74) Representative: Vossius & Partner
(86) International application number: PCT/IL2001/000711
(87) International publication number: WO 2002/014005

(56) References cited:
- EP-A- 0 776 719
- EP-A- 1 029 620
- US-A- 5 598 751
- US-A- 5 899 642
- US-A- 6 053 670

## Description

This invention relates generally to cutting tool assemblies for metal cutting machining having a replaceable cutting head, and more particularly to cutting tool assemblies having an elongated shank for rotary cutting operations (see for example EP-A-0 776 719).

Such cutting tool assemblies have long been known. It has been proposed in EP 0 298 937 B1, to provide a cutting tool comprising a cutting body and a shaft that supports the cutting body. The cutting body is detachably connected to a locking screw via hook-shaped means. The hook shaped means transfers axial forces between the cutting body and the locking screw. Both the cutting body and the locking screw are provided with hook shaped means. Both of the hook shaped means are provided with recesses and tongues. The recesses and tongues cooperate to permanently transfer rotational movement between the locking means and the cutting body. The locking screw is provided with an externally threaded portion that is connected to an internally threaded recess provided in the shaft. The threads are designed as right hand threads for right hand cutting tools and as left hand threads for left hand cutting tools. The locking screw is movable in the axial direction by relative rotation of the externally threaded portion with respect to the internally threaded recess. The shaft is provided with a conical seat and the cutting body is provided with a circumferential conical portion that is received in the conical seat of the shaft. The cutting body can be inserted in or removed from the conical seat by displacing the locking screw from its innermost position to an intermediate position.

The prior art cutting tool described above suffers from two basic disadvantages. First, to insert or remove the cutting body from the shaft the locking screw has to be displaced from its innermost position to an intermediate position. Second, the cutting body cannot be used in any other type of tool since it is formed with hook-shaped member and therefore it requires the presence of a locking screw having a mating hook-shaped member for coupling it to the shaft.

It is an object of the present invention to provide a cutting tool assembly that substantially, overcomes the above-mentioned disadvantages.

In accordance with the present invention there is provided a cutting tool assembly comprising:
a tool shank having a forward end, a rear end and a longitudinal axis A passing through the forward and rear ends, an elongated hole extending axially from the forward end of the tool shank, adjacent the forward end of the tool shank the elongated hole having a conical portion, the tool shank having a first coupling member adjacent the rear end thereof;
an elongated support bar having a forward end and a rear end, with a threaded bore extending axially rearwardly from the forward end thereof, the elongated support bar having a conical portion rearward of the forward end thereof, the elongated support bar having a second coupling member adjacent the rear end thereof, the elongated support bar being removably retained in the elongated hole of the tool shank with the first coupling member coupled to the second coupling member and with at least a section of the conical portion of the elongated support bar being in abutment with the conical portion of the elongated hole; and
a cutting head having a forward cutting portion and a rear threaded portion; the rear threaded portion of the cutting head being threadingly engaged with the threaded bore in the forward end of the elongated support bar.

In accordance with a first embodiment of the present invention, the elongated hole has a threaded portion adjacent the rear end thereof and wherein the elongated support bar has an externally threaded portion adjacent the rear end thereof and wherein the elongated support bar is removably retained in the elongated hole of the tool shank with the externally threaded portion of the elongated support bar threadingly engaged with the threaded portion of the elongated hole, the threaded portion of the elongated hole forming the first coupling member and the externally threaded portion of the elongated support bar forming the second coupling member.

In accordance with a second embodiment of the present invention, the tool shank has a threaded through bore passing through a section of the tool shank, the threaded through bore extending from a side opening in the tool shank to the elongated hole, the elongated support bar being removably retained in the elongated hole of the tool shank by a securing screw threadingly retained in the threaded through bore, the securing screw engaging a locking recess formed in the elongated support bar, the securing screw forming the first coupling member and the locking recess of the elongated support bar forming the second coupling member.

In accordance with a third embodiment of the present invention, the cutting tool assembly further comprises a coupling bar generally cylindrically shaped at least a portion of which has an externally threaded surface and having an axially extending through bore with an internally threaded portion, wherein the elongated hole has a threaded portion adjacent the rear end of the tool shank and wherein the elongated support bar has an externally threaded portion adjacent the rear end thereof and wherein the coupling bar is removably retained in the elongated hole of the tool shank adjacent the rear end thereof with the externally threaded surface of the coupling bar threadingly engaged with the threaded portion of the elongated hole and the elongated support bar is removably retained in the elongated hole with the externally threaded portion of the elongated support bar threadingly engaged with the internally threaded portion of the coupling bar, the internally threaded portion of the coupling bar forming the first coupling member and the externally threaded portion of the elongated support bar forming the second coupling member.

In accordance with a fourth embodiment of the present invention, the cutting tool assembly further comprises a cylindrical sleeve having a non-threaded external cylindrical surface and an axially extending threaded through bore and wherein the elongated hole in the tool shank has a cylindrically shaped rear portion in which the cylindrical sleeve is mounted and wherein the elongated support bar is removably retained in the elongated hole with the externally threaded portion of the elongated support bar in threaded engagement with the threaded through bore in the cylindrical sleeve, the threaded through bore in the cylindrical sleeve forming the first coupling member and the externally threaded portion of the elongated support bar forming the second coupling member.

In accordance with a fifth embodiment of the present invention, the cutting tool assembly further comprises a cylindrical sleeve having a non-threaded external cylindrical surface and an axially extending threaded through bore and wherein the elongated hole in the tool shank has a cylindrically shaped rear portion in which the cylindrical sleeve is mounted and wherein the cutting tool assembly further comprises a coupling bar generally cylindrically shaped, at least a portion having an externally threaded surface and having an axially extending through bore with an internally threaded portion, and the coupling bar is removably retained in the cylindrical sleeve with the externally threaded surface of the coupling bar in threaded engagement with the threaded through bore of the cylindrical sleeve and the elongated support bar is removably retained in the elongated hole of the tool shank with the externally threaded portion of the support bar in threaded engagement with the internally threaded portion of the coupling bar, the internally threaded portion of the coupling bar forming the first coupling member and the externally threaded portion of the elongated support bar forming the second coupling member.

If desired, the elongated support bar is provided with a coolant channel for conducting a coolant fluid, the coolant channel extending axially from the rear end to the forward end of the elongated support bar, and the cutting head is provided with a coolant channel extending through the rear threaded portion thereof and exiting the cutting head at exit openings formed in the forward cutting portion thereof.

If desired, the tool shank of the fourth or fifth embodiments of the present invention is made of cemented carbide.

Typically, the cylindrical sleeve is mounted in the tool shank by heat shrink-fit techniques.

Further typically, the cylindrical sleeve is mounted in the tool shank by soldering.

For a better understanding the invention will now be described, by way of example only, with reference to the accompanying drawings in which:
**Fig. 1** is a side view of a cutting tool assembly in accordance with the present invention;
**Fig. 2** is a partially sectioned exploded side view of a first embodiment of the cutting tool assembly shown in Fig. 1;
**Fig. 3** is a partially sectioned exploded side view of a second embodiment of the cutting tool assembly shown in Fig. 1;
**Fig. 4** is a partially sectioned exploded side view of a third embodiment of the cutting tool assembly shown in Fig. 1;
**Fig. 5** is a partially sectioned exploded side view of a fourth embodiment of the cutting tool assembly shown in Fig. 1; and
**Fig. 6** is a partially sectioned exploded side view of a fifth embodiment of the cutting tool assembly shown in Fig. 1.

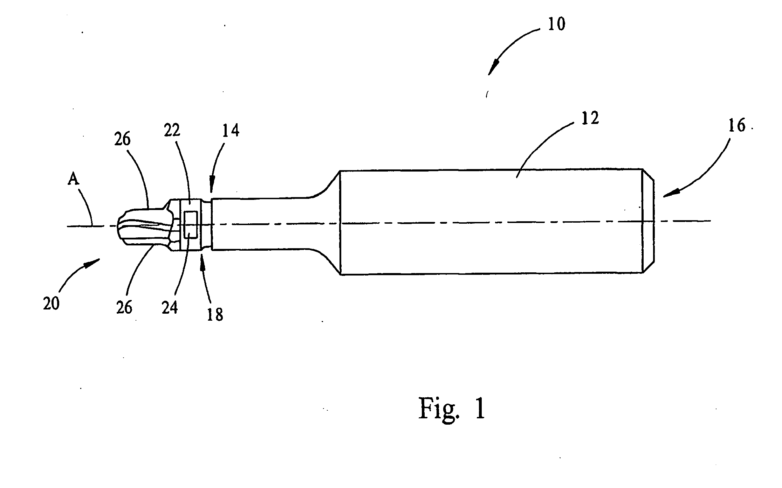

Attention is drawn to the drawings in general and to Fig. 1 in particular, showing a cutting tool assembly **10** in accordance with the present invention. In all the drawings the same reference numerals are used to denote identical or similar parts. The cutting tool assembly **10** comprises a tool shank **12** having a forward end **14,** a rear end **16** and a longitudinal axis A passing through the forward and rear ends. The tool shank **12.** has generally rotational symmetry about the longitudinal axis **A.** The tool shank **12** comprises a forward portion and rear portion, wherein the diameter of the forward portion is preferably smaller than the diameter of the rear portion. As will be described below in greater detail with respect to specific embodiments of the invention, an elongated support bar **18** is removably retained in the tool shank **12** and a cutting head **20** is removably retained in the elongated support bar **18.**

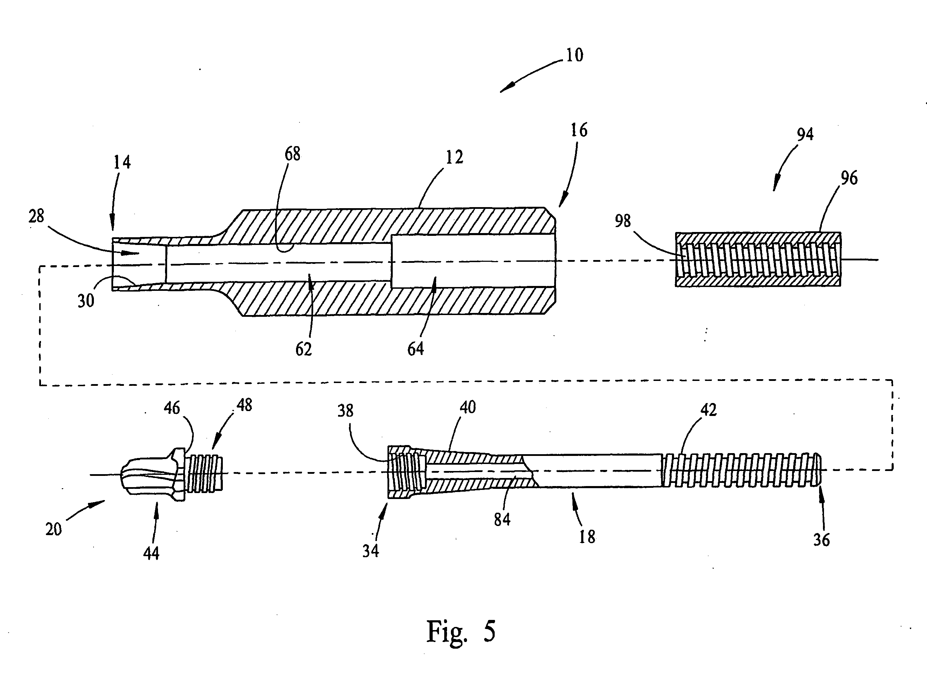

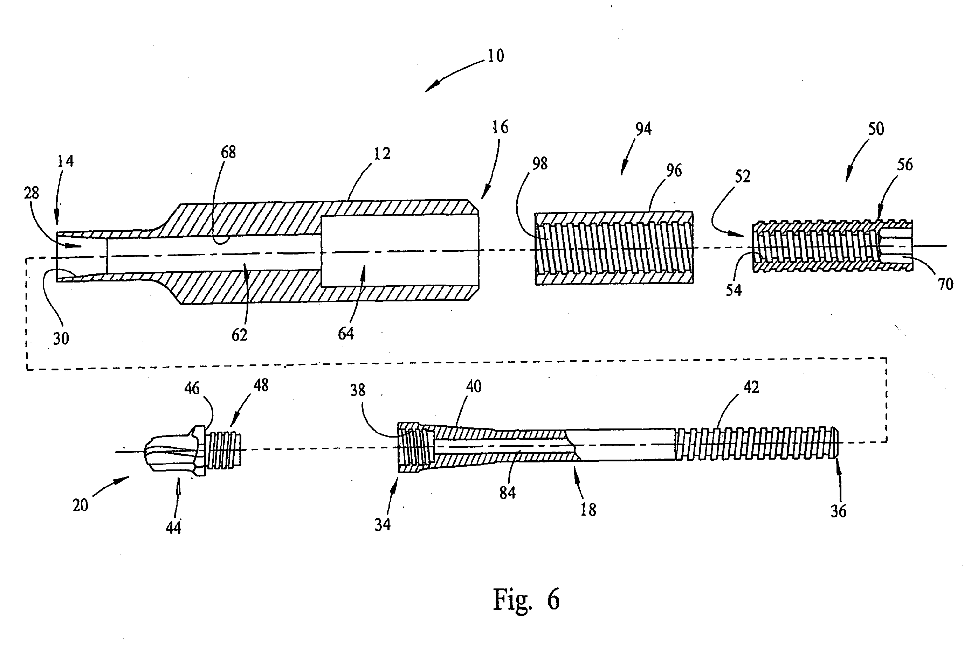

The elongated support bar **18** has a forward end **34** and a rear end **36** and preferably has a cylindrical end portion **22** adjacent the forward end **34.** The cylindrical end portion **22** is preferably provided with diametrically opposite flat surfaces **24** for receiving the jaws of a spanner for tightening or loosening the elongated support bar. Similarly, the cutting head **20** is preferably provided with diametrically opposite flat surfaces **26** for receiving the jaws of a spanner for tightening or loosening the cutting head. Generally, the cutting head **20** is made of cemented carbide. The material from which the tool shank **12** is fabricated generally depends on working conditions, tool life and tool accuracy requirements. Typically; the tool shank is made from alloy steel. However, to reduce vibrations, the tool shank is preferably made of a heavy metal such as Tungsten or a Tungsten alloy, or even from a cemented carbide such as Tungsten carbide. As will be explained in greater detail below with respect to Figs. 5 and 6, the use of a cemented carbide tool shank requires certain modifications in the design of the tool shank as compared with a tool shank made from softer materials.

Although the cylindrical end portion **22** is shown to be of relatively short length in comparison to the overall length of the elongated support bar **18,** this is for illustrational purposes only and it should not be construed as a constraint. In practice, the actual length of the cylindrical end portion **22** is determined by, *inter alia,* machining requirements. Hence, for a given tool shank **12,** the elongated support bar **18** forms an adaptor for using different cutting heads **20** in the cutting tool assembly **10,** wherein the length of the cutting tool assembly can be varied by choosing elongated support bars **18** having cylindrical end portions **22** of different lengths.

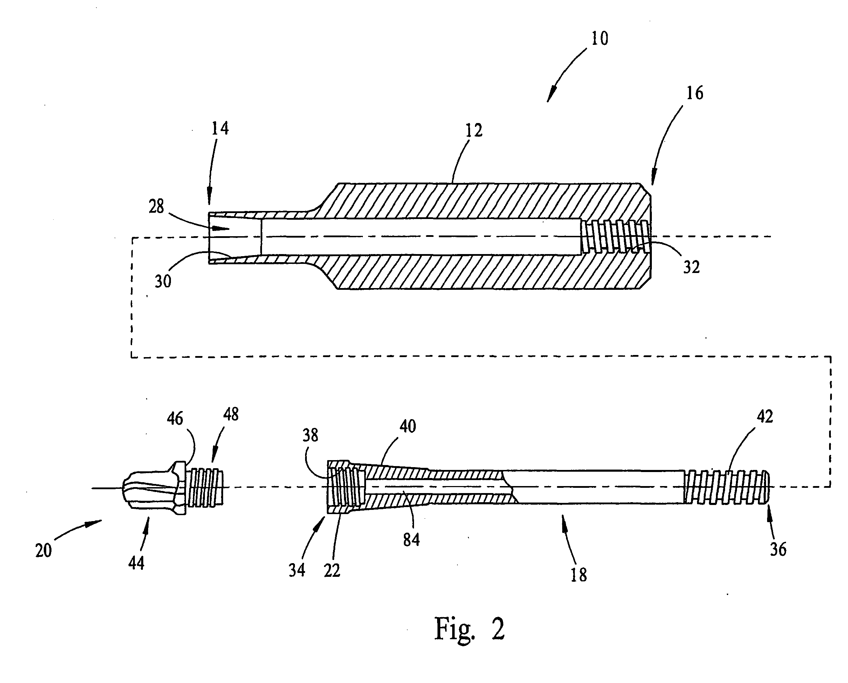

Attention is now drawn to Fig. 2 showing a partially sectioned exploded side view of a first embodiment of the cutting tool assembly **10** of the present invention. An elongated hole **28** extends axially from the forward end **14** to the rear end **16** of the tool shank **12.** The elongated hole **28** has a conical portion **30** adjacent the forward end **14** of the tool shank and a threaded portion **32** adjacent the rear end **16** of the tool shank **12.** The conical portion **30** tapers rearwardly from the forward end **14** of the tool shank **12.** The section of the elongated hole **28** rearward of the conical portion **30** is preferably cylindrical. The threaded portion **32** forms a first coupling member of the cutting tool assembly **10.**

A threaded bore **38** extends rearwardly from the forward end **34** of the elongated support bar **18.** The elongated support bar **18** has a conical portion **40** rearward of the forward end **34** thereof. The conical portion **40** tapers rearwardly, preferably, from adjacent the cylindrical portion **22.** The section of the elongated support bar **18** rearward of the conical portion **40** is preferably cylindrical. Also shown in Fig. 2 is the cylindrical end portion **22** between the forward end **34** and the conical portion **40.** The elongated support bar **18** has an externally threaded portion **42** adjacent the rear end **36** thereof. The externally threaded portion **42** constitutes a second coupling member of the cutting tool assembly **10.** The cutting head **20** has a forward cutting portion **44,** with a rearwardly facing abutment surface **46,** and a rear threaded portion **48.**

In the assembled cutting tool assembly **10** in accordance with the first embodiment of the invention, the elongated support bar **18** is removably retained in the elongated hole **28** of the tool shank **12** with the externally threaded portion **42** in threaded engagement with the threaded portion **32** of the elongated hole **28** and at least a section of the conical portion **40** of the elongated support bar **18** in abutment with the conical portion **30** of the elongated hole **28.** The cutting head **20** is removably retained in the elongated support bar **18** with the rear threaded portion **48** in threaded engagement with the threaded bore **38** in the forward end **34** of the support bar **18.** When the threaded engagement is complete, that is when the cutting head is fully tightened in position, the rearwardly facing abutment surface **46** abuts the forward end **34** of the elongated support bar **18,** as shown in Fig. 1.

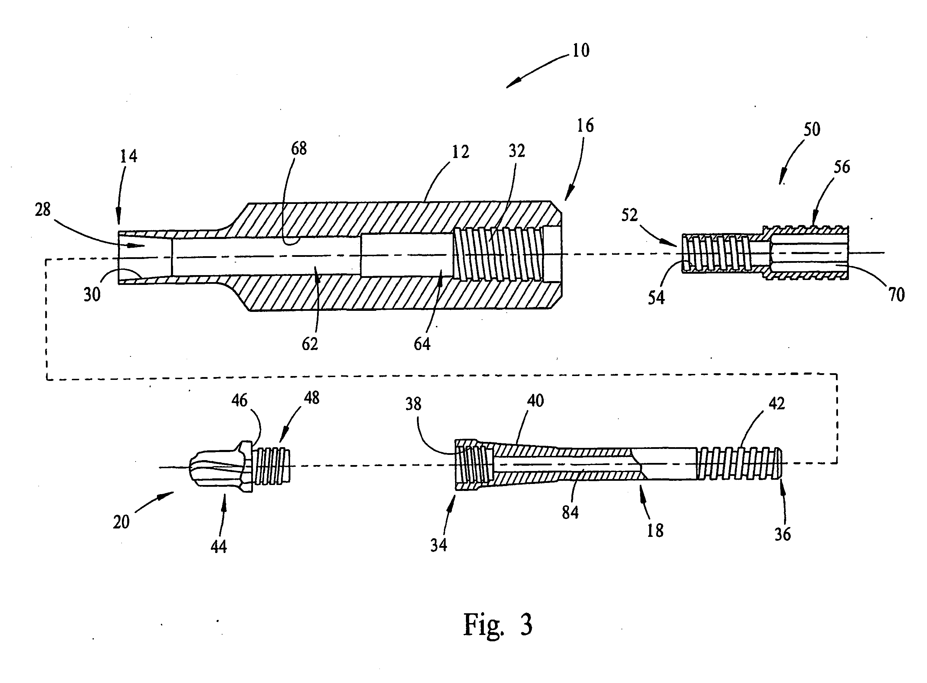

Attention is now drawn to Fig. 3 showing a partially sectioned exploded side view of a second embodiment of the cutting tool assembly **10** of the present invention. The cutting head **20** and the elongated support bar **18** are similar to those of the first embodiment. In accordance with the second embodiment, the cutting tool assembly **10** further comprises a coupling bar **50** having the form of a bushing with a generally cylindrical shape and with an axially extending through bore **52.** The coupling bar **50** comprises an internally threaded portion **54** on part of the through bore **52** and an externally threaded surface **56** covering at least a portion of the coupling bar **50.** The diameter of the externally threaded surface **56** is greater than the diameter of the internally threaded portion **54.** The internally threaded portion **54** has the same thread and internal diameter as the threaded portion **32** of the elongated hole **28** of the tool shank of the first embodiment. Therefore, the internally threaded portion **54** of the coupling bar **50** is capable of threadingly engaging the externally threaded portion **42** of the elongated support bar **18.**

In accordance with the second embodiment, the cutting tool assembly has a tool shank **12** with an elongated hole **28** extending axially between the forward and rear ends thereof. The elongated hole **28** comprises two portions, a forward portion **62** and a rear portion **64.** The forward portion **62** has a conical portion **30** adjacent the forward end **14** of the tool shank **12** and a cylindrical portion **68** extending rearwardly from the conical portion **30.** The rear portion **64** of the elongated hole **28** is cylindrical in shape and has a diameter that is preferably larger than the diameter of the cylindrical portion **68** of the forward portion **62.** The rear portion **64** of the elongated hole **28** has a threaded portion **32** adjacent the rear end **16** of the tool shank **12.** The threaded portion **32** is capable of threadingly engaging the externally threaded surface **56** of the coupling bar **50.** A portion of the through bore **52** adjacent the rear end of the coupling bar **50** forms a socket **70** suitably shaped to receive a key, such as an Allen key, for screwing the coupling member **50** into the tool shank **12.** The internally threaded portion **54** extends rearwardly from the forward end of the coupling bar **50** to the socket **70.** In accordance with the second embodiment, the internally threaded portion **54** of the coupling bar **50** constitutes a first coupling member and the externally threaded portion **42** of the elongated support bar **18** constitutes a second coupling member of the cutting tool assembly **10.**

In the assembled cutting tool assembly **10** in accordance with the second embodiment of the invention, the coupling bar **50** is removably retained in the rear portion **64** of the elongated hole **28** with the externally threaded surface **56** of the coupling bar **50** in threaded engagement with the threaded portion **32** of the rear portion **64** of the elongated hole **28.** The elongated support bar **18** is removably retained in the elongated hole **28** of the tool shank **12** with the externally threaded portion **42** in threaded engagement with the internally threaded portion **54** of the coupling bar **50** and at least a section of the conical portion **40** of the elongated support bar **18** in abutment with the conical portion **30** of the elongated hole **28.** The cutting head **20** is removably retained in the elongated support bar **18** with the rear threaded portion **48** in threaded engagement with the threaded bore **38** in the forward end of the support bar **18.** When the threaded engagement is complete, that is when the cutting head is fully tightened in position, the rearwardly facing abutment surface **46** abuts the forward end of the elongated support bar **18.** Although, in accordance with the second embodiment, the coupling bar **50** is shown to be externally threaded on a rear portion thereof, this arrangement is by no means binding and the coupling bar **50** can be externally threaded on any convenient portion. If desired, the whole of the coupling bar **50** can be externally threaded, as will be illustrated below in Fig. 6 with reference to a fifth embodiment of the invention. Clearly, the location and length of the threaded portion **32** of the rear portion of the elongated hole **28** of the tool shank **12** have to be appropriately designed so as to be able to threadingly engage the externally threaded surface of the coupling bar.

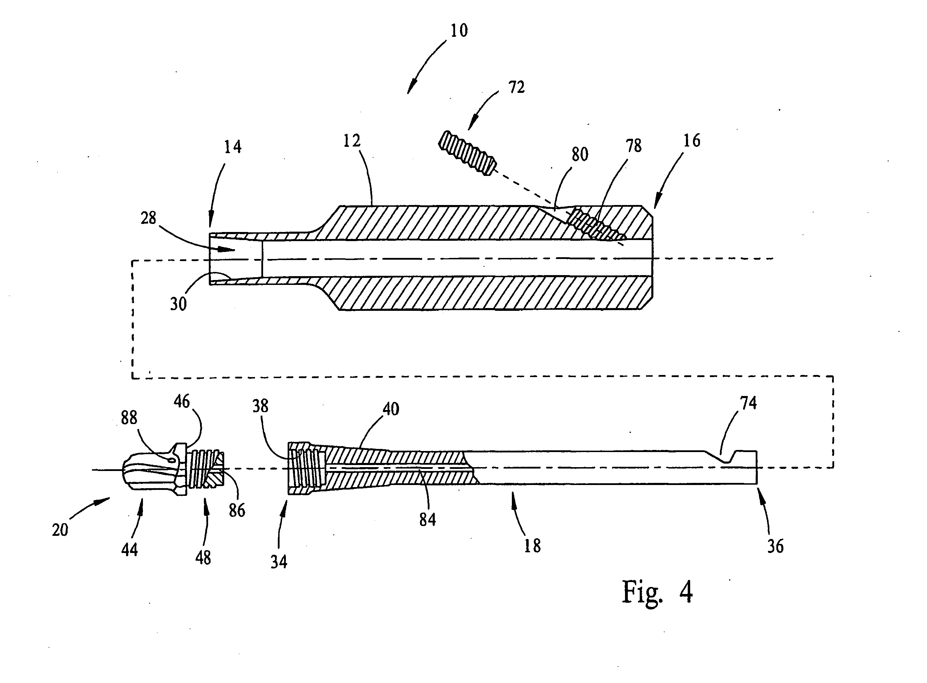

Attention is now drawn to Fig. 4 showing a partially sectioned exploded side view of a third embodiment of the cutting tool assembly **10** of the present invention. In accordance with the third embodiment the first coupling member is a securing screw **72** and the second coupling member is a locking recess **74.** The tool shank **12** has a threaded through bore **78** passing through a section of the tool shank, the threaded through bore **78** extends from a side opening **80** in the tool shank to the elongated hole **28.** The side opening **80** can be located at any point rearward of the forward end **14** of the tool shank, but it is preferably located adjacent the rear end **16** of the tool shank **12.** The elongated support bar **18** is removably retained in the elongated hole **28** of the tool shank **12** by the securing screw **72** which is threadingly engaged with the threaded through bore **78** and which engages the locking recess **74** in the elongated support bar **18.**

If desired, the elongated support bar **18** is provided with a coolant channel **84** for conducting a coolant fluid, the coolant channel extending axially from the rear end **36** of the elongated support bar **18** to the threaded bore **38** in the forward end **34** of the elongated support bar **18.** Further if desired, the cutting head **20** is provided with a coolant channel **86** extending through the rear threaded portion **48** thereof and exiting the cutting head at exit openings **88** formed in the forward cutting portion **44** thereof.

The three embodiments described above all require internal threading of the tool shank. However, as mentioned above, for some applications it is desirable to fabricate the tool shank from cemented carbide such as Tungsten carbide. Due to the difficulty involved in forming an internal thread on a bore in a tool bar made of cemented carbide a different approach is used, as will be described below with reference to the embodiments shown in Figs. 5 and 6. However, it will be appreciated that the embodiments shown in Figs. 5 and 6 are not restricted to tool shanks made of solid carbide but can also be used for tool shanks made of other materials.

Attention is now drawn to Fig. 5 showing a partially sectioned exploded side view of a fourth embodiment of the cutting tool assembly **10** of the present invention. As with the embodiments described above, the elongated support bar **18** is removably retained in a tool shank **12** and the cutting head **20** is removably retained in the elongated support bar **18.** In accordance with the fourth embodiment, the cutting tool assembly has a tool shank **12** with an elongated hole **28** extending axially between the forward and rear ends thereof. The elongated hole **28** comprises two portions, a forward portion **62** and a rear portion **64.** The forward portion **62** has a conical portion **30** adjacent the forward end **14** of the tool shank **12** and a cylindrical portion **68** extending rearwardly from the conical portion **30.** The rear portion **64** of the elongated hole **28** is cylindrical in shape and has a diameter that is preferably larger than the diameter of the cylindrical portion **68** of the forward portion **62.**

The cutting tool assembly **10** shown in Fig. 5 further comprises a cylindrical sleeve **94** having a non-threaded external cylindrical surface **96** and an axially extending threaded through bore **98.** The cylindrical sleeve **94** is made of a material such as steel in which the threaded through bore **98** can be made without difficulty. The cylindrical sleeve **94** can be retainably mounted in the rear portion **64** of the tool shank **12** either by soldering or by known heat shrink-fit techniques. If soldering is used, the diameter of the cylindrical sleeve **94** should be smaller than the diameter of the rear portion **64** of the elongated hole **28** by, for example, approximately one tenth of a millimeter. If a heat shrink-fit technique is used then the diameter of the cylindrical sleeve **94** should be larger than the diameter of the rear portion **64** of the elongated hole **28** by, for example, a few hundredths of a millimeter. In general terms, a heat shrink-fit technique applied to the present embodiment would involve heating the rear portion **64** of the tool shank **12** until it expands sufficiently to enable the insertion of the cylindrical sleeve **94.** The rear portion **64** of the tool shank **12** is then cooled and cylindrical sleeve **94** becomes firmly mounted therein.

After the cylindrical sleeve **94** has been mounted in the rear portion **64** of the elongated hole **28** the elongated support bar **18** can be removably retained in the elongated hole **28** by threadingly engaging the externally threaded portion **42** of the elongated support bar **18** with the threaded through bore **98** of the cylindrical sleeve. The threaded through bore **98** forms a first coupling member of the cutting tool assembly **10,** whereas the externally threaded portion **42** of the elongated support bar **18** constitutes a second coupling member of the cutting tool assembly **10.** It will be apparent that once the cylindrical sleeve **94** has been mounted in the rear portion **64** of the elongated hole **28,** the resulting tool shank **12** of the fourth embodiment is generally equivalent to the tool shank **12** of the first embodiment shown in Fig. 2.

Attention is now drawn to Fig. 6 showing a partially sectioned exploded side view of a fifth embodiment of the cutting tool assembly **10** of the present invention. In accordance with the fifth embodiment, the cutting tool assembly has a tool shank **12** with an elongated hole **28** extending axially between the forward and rear ends thereof. The elongated hole **28** comprises two portions, a forward portion **62** and a rear portion **64.** The forward portion **62** has a conical portion **30** adjacent the forward end **14** of the tool shank **12** and a cylindrical portion **68** extending rearwardly from the conical portion **30.** The rear portion **64** of the elongated hole **28** is cylindrical in shape and has a diameter that is preferably larger than the diameter of the cylindrical portion **68** of the forward portion **62.**

As with the fourth embodiment of the present invention, the cutting tool assembly **10** in accordance with the fifth embodiment shown in Fig. 6 further comprises a cylindrical sleeve **94** having a non-threaded external cylindrical surface 96 and an axially extending threaded through bore **98.** The cylindrical sleeve **94** is made of a material such as steel in which the threaded through bore **98** can be made without difficulty. The cylindrical sleeve **94** can be retainably mounted in the rear portion **64** of the elongated hole **28** either by soldering or by heat shrink-fit techniques. If soldering is used, the diameter of the cylindrical sleeve **94** should be smaller than the diameter of the rear portion **64** of the elongated hole **28** by, for example, approximately one tenth of a millimeter. If a heat shrink-fit technique is used then the diameter of the cylindrical sleeve **94** should be larger than the diameter of the rear portion **64** of the elongated hole **28** by, for example, a few hundredths of a millimeter.

In accordance with the fifth embodiment, the cutting tool assembly **10** still further comprises a coupling bar **50** having the form of a bushing with a generally cylindrical shape and an axially extending through bore **52**. As with the second embodiment, shown in Fig. 3, the coupling bar **50** has an internally threaded portion **54** having the same thread and internal diameter as the threaded portion **32** of the elongated hole **28** of the tool shank of the first embodiment. Therefore, the internally threaded portion **54** of the coupling bar **50** is capable of threadingly engaging the externally threaded portion **42** of the elongated support bar **18.** As previously mentioned, the coupling bar **50** in accordance with the fifth embodiment has an externally threaded surface **56** covering the whole of the coupling bar 50. This feature, of complete external threading, could also be used for the coupling bar 50 in accordance with the second embodiment.

In the assembled cutting tool assembly **10** in accordance with the fifth embodiment of the invention, the cylindrical sleeve **94** is mounted in the rear portion **64** of the elongated hole **28** and the coupling bar **50** is removably retained in the cylindrical sleeve **94** with the externally threaded surface **56** of the coupling bar **50** in threaded engagement with the threaded through bore **98** of the cylindrical sleeve **94.** The elongated support bar **18** is removably retained in the elongated hole **28** of the tool shank **12** with the externally threaded portion **42** in threaded engagement with the internally threaded portion **54** of the coupling bar **50** and at least a section of the conical portion **40** of the elongated support bar **18** in abutment with the conical portion **30** of the elongated hole **28.** The cutting head **20** is removably retained in the elongated support bar **18** with the rear threaded portion **48** in threaded engagement with the threaded bore **38** in the forward end of the support bar **18.**

In both the second and fifth embodiments, the internal thread on the internally threaded portion **54** and the external thread on the externally threaded surface **56** have different lead angles. Typically, the lead angle of the internal thread is greater than the lead angle of the external thread.

Although the present invention has been described to a certain degree of particularity, it should be understood that various alterations and modifications can be made without departing from the scope of the invention as hereinafter claimed.

## Claims

1. A cutting tool assembly (10) comprising:
a tool shank (12) having a forward end (14), a rear end (16) and a longitudinal axis (A) passing through the forward and rear ends, an elongated hole (28) extending axially from the forward end (14) of the tool shank (12), adjacent the forward end (14) of the tool shank (12) the elongated hole (28) having a conical portion (30), the tool shank (12) having a first coupling member adjacent the rear end (16) thereof;
an elongated support bar (18) having a forward end (34) and a rear end (36), with a threaded bore (38) extending axially rearwardly from the forward end (34) of the elongated support bar (18), the elongated support bar (18) having a conical portion (40) rearward of the forward end (34) thereof, the elongated support bar (18) having a second coupling member adjacent the rear end (36) thereof, the elongated support bar (18) being removably retained in the elongated hole (28) of the tool shank (12) with the first coupling member coupled to the second coupling member and with at least a section of the conical portion (40) of the elongated support bar (18) being in abutment with the conical portion (30) of the elongated hole (28); and **characterised by**
a cutting head (20) having a forward cutting portion (44) and a rear threaded portion (48); the rear threaded portion (48) of the cutting head (20) being threadingly engaged with the threaded bore (38) in the forward end (34) of the elongated support bar (18).

2. The cutting tool assembly according to Claim 1, wherein the elongated hole (28) has a threaded portion (32) adjacent the rear end (16) thereof and wherein the elongated support bar (18) has an externally threaded portion (14) adjacent the rear end (36) thereof and wherein the elongated support bar (18) is removably retained in the elongated hole (28) of the tool shank (12) with the externally threaded portion (42) of the elongated support bar (18) threadingly engaged with the threaded portion (32) of the elongated hole (28), the threaded portion (32) of the elongated hole (28) forming the first coupling member and the externally threaded portion (42) of the elongated support bar (18) forming the second coupling member.

3. The cutting tool assembly (10) according to Claim 2, further comprising a coupling bar (50) generally cylindrically shaped, at least a portion having an externally threaded surface (56) and having an axially extending through bore (52) with an internally threaded portion (54), wherein the elongated hole (28) has a threaded portion (32) adjacent the rear end (16) of the tool shank (12) and wherein the elongated support bar (18) has an externally threaded portion (42) adjacent the rear end (36) thereof and wherein the coupling bar (50) is removably retained in the elongated hole (28) of the tool shank (12) adjacent the rear end (16) thereof with the externally threaded surface (56) of the coupling bar (50) threadingly engaged with the threaded portion (32) of the elongated hole (28) and the elongated support bar (18) is removably retained in the elongated hole (28) with the externally threaded portion (42) of the elongated support bar (18) threadingly engaged with the internally threaded portion (54) of the coupling bar (50), the internally threaded portion (54) of the coupling bar (50) forming the first coupling member and the externally threaded portion (42) of the elongated support bar (18) forming the second coupling member.

4. The cutting tool assembly (10) according to Claim 1, wherein the cutting tool assembly (10) further comprises a cylindrical sleeve (94) having a non-threaded external cylindrical surface (96) and an axially extending threaded through bore (98) and wherein the elongated hole (28) in the tool shank (12) has a cylindrically shaped rear portion (64) in which the cylindrical sleeve is mounted and wherein the elongated support bar (18) is removably retained in the elongated hole (28) with the externally threaded portion (42) of the elongated support bar (18) in threaded engagement with the threaded through bore (98) in the cylindrical sleeve (94), the threaded through bore (98) in the cylindrical sleeve (94) forming the first coupling member and the externally threaded portion (42) of the elongated support bar (18) forming the second coupling member.

5. The cutting tool assembly (10) according to Claim 1, wherein the cutting tool assembly (10) further comprises a cylindrical sleeve (94) having a non-threaded external cylindrical surface (96) and an axially extending threaded through bore (98) and wherein the elongated hole (28) in the tool shank (12) has a cylindrically shaped rear portion (64) in which the cylindrical sleeve is mounted and wherein the cutting tool assembly (10) further comprises a coupling bar (50) generally cylindrically shaped, at least a portion of the coupling bar (50) having an externally threaded surface (56) and having an axially extending through bore (52) with an internally threaded portion (54), and the coupling bar (50) is removably retained in the cylindrical sleeve (94) with the externally threaded surface (56) of the coupling bar (50) in threaded engagement with the threaded through bore (98) of the cylindrical sleeve (94) and the elongated support bar (18) is removably retained in the elongated hole (28) of the tool shank (12) with the externally threaded portion (42) in threaded engagement with the internally threaded portion (54) of the coupling bar (50), the internally threaded portion (54) of the coupling bar (50) forming the first coupling member and the externally threaded portion (42) of the elongated support bar (18) forming the second coupling member.

6. The cutting tool assembly (10) according to Claim 1, wherein the tool shank (12) has a threaded through bore (78) passing through a section of the tool shank (12), the threaded through bore (78) extending from a side opening (80) in the tool shank (12) to the elongated hole (28), the elongated support bar (18) being removably retained in the elongated hole (28) of the tool shank (12) by a securing screw (72) threadingly retained in the threaded through bore (78), the securing screw (72) engaging a locking recess (74) formed in the elongated support bar (18), the securing screw (72) forming the first coupling member and the locking recess (74) of the elongated support bar (18) forming the second coupling member.

7. The cutting tool assembly (10) according to Claim 1, wherein the elongated support bar (18) is provided with a coolant channel (84) for conducting a coolant fluid, the coolant channel extending axially from the rear end (36) to the forward end (34) of the elongated support bar (18), and the cutting head (20) is provided with a coolant channel (86) extending through the rear threaded portion (48) thereof and exiting the cutting head at exit openings (88) formed in the forward cutting portion (44) thereof.

8. The cutting tool assembly (10) according to Claims 4 or 5, wherein the tool shank (12) is made of cemented carbide.

9. The cutting tool assembly (10) according to Claim 8, wherein the cylindrical sleeve (94) is mounted in the tool shank (12) by a heat shrink-fit technique.

10. The cutting tool assembly (10) according to Claim 8, wherein the cylindrical sleeve (94) is mounted in the tool shank (12) by soldering.

11. The cutting tool assembly (10) according any one of the preceding claims, wherein the cutting head (20) is made of cemented carbide.

## Patentansprüche

1. Schneidwerkzeug-Anordnung (10), die aufweist:
einen Werkzeugschaft (12), der ein vorderes Ende (14), ein hinteres Ende (16) und eine Längsachse (A) aufweist, die durch die vorderen und hinteren Enden geht, wobei sich ein längliches Loch (28) axial vom vorderen Ende (14) des Werkzeugschafts (12) erstreckt, wobei das längliche Loch (28) benachbart zu dem vorderen Ende (14) des Werkzeugschafts (12) einen konischen Abschnitt (30) aufweist, wobei der Werkzeugschaft (12) benachbart zu dem hinteren Ende (16) davon ein erstes Kopplungselement aufweist;
eine längliche Haltestange (18), die ein vorderes Ende (34) und ein hinteres Ende (36) aufweist, wobei sich vom vorderen Ende (34) der länglichen Haltestange (18) eine Gewindebohrung (38) axial nach hinten erstreckt, wobei die längliche Haltestange (18) hinter dem vorderen Ende (34) davon einen konischen Abschnitt (40) aufweist, wobei die längliche Haltestange (18) benachbart zu dem hinteren Ende (36) davon ein zweites Kopplungselement aufweist, wobei die längliche Haltestange (18) entfernbar im länglichen Loch (28) des Werkzeugschafts (12) gehalten wird, wobei das erste Kopplungselement mit dem zweiten Kopplungselement gekoppelt ist und wobei mindestens ein Teilstück des konischen Abschnitts (40) der länglichen Haltestange (18) an den konischen Abschnitt (30) des länglichen Lochs (28) anstößt; und **gekennzeichnet ist durch**
einen Schneidkopf (20), der einen vorderen Schneidabschnitt (44) und einen hinteren Gewindeabschnitt (48) aufweist; wobei der hintere Gewindeabschnitt (48) des Schneidkopfes (20) mit der Gewindebohrung (38) im vorderen Ende (34) der länglichen Haltestange (18) in Gewindeeingriff steht.

2. Schneidwerkzeug-Anordnung nach Anspruch 1, wobei das längliche Loch (28) benachbart zu dem hinteren Ende (16) davon einen Gewindeabschnitt (32) aufweist, und wobei die längliche Haltestange (18) benachbart zu dem hinteren Ende (36) davon einen Außengewindeabschnitt (14) aufweist, und wobei die längliche Haltestange (18) entfernbar im länglichen Loch (28) des Werkzeugschafts (12) gehalten wird, wobei der Außengewindeabschnitt (42) der länglichen Haltestange (18) mit dem Gewindeabschnitt (32) des länglichen Lochs (28) in Gewindeeingriff steht, wobei der Gewindeabschnitt (32) des länglichen Lochs (28) das erste Kopplungselement bildet und der Außengewindeabschnitt (42) der länglichen Haltestange (18) das zweite Kopplungselement bildet.

3. Schneidwerkzeug-Anordnung (10) nach Anspruch 2, die ferner eine Kopplungsstange (50) aufweist, die im wesentlichen zylindrisch geformt ist, wobei mindestens ein Abschnitt eine Außengewindefläche (56) aufweist und eine sich axial erstreckende Durchgangsbohrung (52) mit einem Innengewindeabschnitt (54) aufweist, wobei das längliche Loch (28) einen Gewindeabschnitt (32) aufweist, der benachbart zu dem hinteren Ende (16) des Werkzeugschafts (12) ist, und wobei die längliche Haltestange (18) einen Außengewindeabschnitt (42) aufweist, der benachbart zum hinteren Ende (36) davon ist, und wobei die Kopplungsstange (50) entfernbar im länglichen Loch (28) des Werkzeugschafts (12) benachbart zu dem hinteren Ende (16) davon gehalten wird, wobei die Außengewindefläche (56) der Kopplungsstange (50) mit dem Gewindeabschnitt (32) des länglichen Lochs (28) in Gewindeeingriff steht, und die längliche Haltestange (18) entfernbar im länglichen Loch (28) gehalten wird, wobei der Außengewindeabschnitt (42) der länglichen Haltestange (18) mit dem Innengewindeabschnitt (54) der Kopplungsstange (50) in Gewindeeingriff steht, wobei der Innengewindeabschnitt (54) der Kopplungsstange (50) das erste Kopplungselement bildet und der Außengewindeabschnitt (42) der länglichen Haltestange (18) das zweite Kopplungselement bildet.

4. Schneidwerkzeug-Anordnung (10) nach Anspruch 1, wobei die Schneidwerkzeug-Anordnung (10) ferner eine zylindrische Hülse (94) aufweist, die eine gewindelose zylindrische Außenfläche (96) und eine sich axial erstreckende Gewindedurchgangsbohrung (98) aufweist, und wobei das längliche Loch (28) im Werkzeugschaft (12) einen zylindrisch geformten hinteren Abschnitt (64) aufweist, in dem die zylindrische Hülse angebracht ist, und wobei die längliche Haltestange (18) entfernbar im länglichen Loch (28) gehalten wird, wobei sich der Außengewindeabschnitt (42) der länglichen Haltestange (18) mit der Gewindedurchgangsbohrung (98) in der zylindrischen Hülse (94) in Gewindeeingriff befindet, wobei die Gewindedurchgangsbohrung (98) in der zylindrischen Hülse (94) das erste Kopplungselement bildet und der Außengewindeabschnitt (42) der länglichen Haltestange (18) das zweite Kopplungselement bildet.

5. Schneidwerkzeug-Anordnung (10) nach Anspruch 1, wobei die Schneidwerkzeug-Anordnung (10) ferner eine zylindrische Hülse (94) aufweist, die eine gewindelose zylindrische Außenfläche (96) und eine sich axial erstreckende Gewindedurchgangsbohrung (98) aufweist, und wobei das längliche Loch (28) im Werkzeugschaft (12) einen zylindrisch geformten hinteren Abschnitt (64) aufweist, in dem die zylindrische Hülse angebracht ist, und wobei die Schneidwerkzeug-Anordnung (10) ferner eine Kopplungsstange (50) aufweist, die im wesentlichen zylindrisch geformt ist, wobei mindestens ein Abschnitt der Kopplungsstange (50) eine Außengewindefläche (56) aufweist und eine sich axial erstreckende Durchgangsbohrung (52) mit einem Innengewindeabschnitt (54) aufweist, und die Kopplungsstange (50) entfernbar in der zylindrischen Hülse (94) gehalten wird, wobei sich die Außengewindefläche (56) der Kopplungsstange (50) mit der Gewindedurchgangsbohrung (98) der zylindrischen Hülse (94) in Gewindeeingriff befindet, und die längliche Haltestange (18) entfernbar im länglichen Loch (28) des Werkzeugschafts (12) gehalten wird, wobei sich der Außengewindeabschnitt (42) mit dem Innengewindeabschnitt (54) der Kopplungsstange (50) in Gewindeeingriff befindet, wobei der Innengewindeabschnitt (54) der Kopplungsstange (50) das erste Kopplungselement bildet und der Außengewindeabschnitt (42) der länglichen Haltestange (18) das zweite Kopplungselement bildet.

6. Schneidwerkzeug-Anordnung (10) nach Anspruch 1, wobei der Werkzeugschaft (12) eine Gewindedurchgangsbohrung (78) aufweist, die durch ein Teilstück des Werkzeugschafts (12) geht, wobei sich die Gewindedurchgangsbohrung (78) von einer Seitenöffnung (80) im Werkzeugschaft (12) zum länglichen Loch (28) erstreckt, wobei die längliche Haltestange (18) durch eine Sicherungsschraube (72), die durch einen Gewindeeingriff in der Gewindedurchgangsbohrung (78) gehalten wird, entfernbar im länglichen Loch (28) des Werkzeugschafts (12) gehalten wird, wobei die Sicherungsschraube (72) in eine Rastaussparung (74) eingreift, die in der länglichen Haltestange (18) ausgebildet ist, wobei die Sicherungsschraube (72) das erste Kopplungselement bildet und die Rastaussparung (74) der länglichen Haltestange (18) das zweite Kopplungselement bildet.

7. Schneidwerkzeug-Anordnung (10) nach Anspruch 1, wobei die längliche Haltestange (18) mit einem Kühlkanal (84) zum Leiten einer Kühlflüssigkeit versehen ist, wobei sich der Kühlkanal axial vom hinteren Ende (36) zum vorderen Ende (34) der länglichen Haltestange (18) erstreckt, und der Schneidkopf (20) mit einem Kühlkanal (86) versehen ist, der sich durch den hinteren Gewindeabschnitt (48) davon erstreckt und aus dem Schneidkopf an Austrittsöffnungen (88) austritt, die im vorderen Schneidabschnitt (44) davon ausgebildet sind.

8. Schneidwerkzeug-Anordnung (10) nach Anspruch 4 oder 5, wobei der Werkzeugschaft (12) aus Sinterhartmetall besteht.

9. Schneidwerkzeug-Anordnung (10) nach Anspruch 8, wobei die zylindrische Hülse (94) im Werkzeugschaft (12) durch eine Wärmeaufschrumpftechnik angebracht ist.

10. Schneidwerkzeug-Anordnung (10) nach Anspruch 8, wobei die zylindrische Hülse (94) im Werkzeugschaft (12) durch Löten angebracht ist.

11. Schneidwerkzeug-Anordnung (10) nach einem der vorhergehenden Ansprüche, wobei der Schneidkopf (20) aus Sinterhartmetall besteht.

## Revendications

1. Ensemble d'outil de coupe (10) comprenant :
un corps d'outil (12) ayant une extrémité avant (14), une extrémité arrière (16) et un axe longitudinal (A) passant par les extrémités avant et arrière, un trou allongé (28) s'étendant axialement à partir de l'extrémité avant (14) du corps d'outil (12), adjacent à l'extrémité avant (14) du corps d'outil (12), le trou allongé (28) ayant une partie conique (30), le corps d'outil (12) ayant un premier élément de couplage adjacent à son extrémité arrière (16) ;
une barre de support allongée (18) ayant une extrémité avant (34) et une extrémité arrière (36), avec un alésage fileté (38) s'étendant axialement vers l'arrière à partir de l'extrémité avant (34) de la barre de support allongée (18), la barre de support allongée (18) ayant une partie conique (40) à l'arrière de son extrémité avant (34), la barre de support allongée (18) ayant un second élément de couplage adjacent à son extrémité arrière (36), la barre de support allongée (18) étant maintenue de manière amovible dans le trou allongé (28) du corps d'outil (12) avec le premier élément de couplage couplé au second élément de couplage et avec au moins une section de la partie conique (40) de la barre de support allongée (18) étant en aboutement avec la partie conique (30) du trou allongé (28) ; et **caractérisé par**
une tête de coupe (20) ayant une partie de coupe avant (44) et une partie filetée arrière (48) ; la partie filetée arrière (48) de la tête de coupe (20) étant en prise par filetage avec l'alésage fileté (38) dans la partie avant (34) de la barre de support allongée (18).

2. Ensemble d'outil de coupe selon la revendication 1, dans lequel le trou allongé (28) possède une partie filetée (32) adjacente à son extrémité arrière (16) et où la barre de support allongée (18) possède une partie filetée de manière externe (14) adjacente à son extrémité arrière (36) et où la barre de support allongée (18) est maintenue de manière amovible dans le trou allongé (28) du corps d'outil (12) la partie filetée de manière externe (42) de la barre de support allongée (18) étant en prise par filetage avec la partie filetée (32) du trou allongé (28), la partie filetée (32) du trou allongé (28) formant le premier élément de couplage et la partie filetée de manière externe (42) de la barre de support allongée (18) formant le second élément de couplage.

3. Ensemble d'outil de coupe (10) selon la revendication 2, comprenant en outre une barre de couplage (50) de forme généralement cylindrique, au moins une partie ayant une surface filetée de manière externe (56) et ayant un alésage traversant s'étendant axialement (52) avec une partie filetée de manière interne (54), où le trou allongé (28) possède une partie filetée (32) adjacente à l'extrémité arrière (16) du corps d'outil (12) et où la barre de support allongée (18) possède une partie filetée de manière externe (42) adjacente à son extrémité arrière (36) et où la barre de couplage (50) est maintenue de manière amovible dans le trou allongé (28) du corps d'outil (12) adjacent à son extrémité arrière (16) avec la surface filetée externe (56) de la barre de couplage (50) en prise par filetage avec la partie filetée (32) du trou allongé (28) et la barre de support allongée (18) est maintenue de manière amovible dans le trou allongé (28), la partie filetée de manière externe (42) de la barre de support allongée (18) étant en prise par filetage avec la partie filetée de manière interne (54) de la barre de couplage (50), la partie filetée de manière interne (54) de la barre de couplage (50) formant le premier élément de couplage et la partie filetée de manière externe (42) de la barre de support allongée (18) formant le second élément de couplage.

4. Ensemble d'outil de coupe (10) selon la revendication 1, dans lequel l'ensemble d'outil de coupe (10) comprend en outre un manchon cylindrique (94) ayant une surface cylindrique externe non filetée (96) et un alésage traversant s'étendant axialement (98) et où le trou allongé (28) dans le corps d'outil (12) possède une partie arrière de forme cylindrique (64) où le manchon cylindrique est monté et où la barre de support allongée (18) est maintenue de manière amovible dans le trou allongé (28), la partie filetée de manière externe (42) de la barre de support allongée (18) étant en prise par filetage avec l'alésage traversant fileté (98) dans le manchon cylindrique (94), l'alésage traversant fileté (98) dans le manchon cylindrique (94) formant le premier élément de couplage et la partie filetée de manière externe (42) de la barre de support allongée (18) formant le second élément de couplage.

5. Ensemble d'outil de coupe (10) selon la revendication 1, dans lequel l'ensemble d'outil de coupe (10) comprend en outre un manchon cylindrique (94) ayant une surface cylindrique externe non filetée (96) et un alésage traversant s'étendant axialement (98) et où le trou allongé (28) dans le corps d'outil (12) possède une partie arrière de forme cylindrique (64) où le manchon cylindrique est monté et dans lequel l'ensemble d'outil de coupe (10) comprend en outre une barre de couplage (50) de forme généralement cylindrique, au moins une partie de barre de couplage (50) ayant une surface filetée de manière externe (56) et ayant un alésage traversant s'étendant axialement (52) avec une partie filetée de manière interne (54), et la barre de couplage (50) étant maintenue de manière amovible dans le manchon cylindrique (94) avec la surface filetée de manière externe (56) de la barre de couplage (50) en prise par filetage avec l'alésage traversant fileté (98) du manchon cylindrique (94) et la barre de support allongée (18) étant maintenue de manière amovible dans le trou allongé (28) du corps d'outil (12), la partie filetée de manière externe (42) étant en prise par filetage avec la partie filetée de manière interne (54) de la barre de couplage (50), la partie filetée de manière interne (54) de la barre de couplage (50) formant le premier élément de couplage et la partie filetée de manière externe (42) de la barre de support allongée (18) formant le second élément de couplage.

6. Ensemble d'outil de coupe (10) selon la revendication 1, dans lequel le corps d'outil (12) possède un alésage traversant fileté (78) passant par une section du corps d'outil (12), l'alésage traversant fileté (78) s'étendant à partir d'une ouverture latérale (80) dans le corps d'outil (12) vers le trou allongé (28), la barre de support allongée (18) étant maintenue de manière amovible dans le trou allongé (28) du corps d'outil (12) par une vis de fixation (72) maintenue par filetage dans l'alésage traversant fileté (78), la vis de fixation (72) mettant en prise un évidement de blocage (74) formé dans la barre de support allongée (18), la vis de fixation (72) formant le premier élément de couplage et le évidement de blocage (74) de la barre de support allongée (18) formant le second élément de couplage.

7. Ensemble d'outil de coupe (10) selon la revendication 1, dans lequel la barre de support allongée (18) est munie d'un canal de fluide de refroidissement (84) pour acheminer un fluide de refroidissement, le canal de fluide de refroidissement s'étendant axialement à partir de l'extrémité arrière (36) vers l'extrémité avant (34) de la barre de support allongée (18), et la tête de coupe (20) est munie d'un canal de fluide de refroidissement (86) s'étendant à travers sa partie filetée arrière (48) et sortant de la tête de coupe à des ouvertures de sortie (88) formées dans sa partie de coupe avant (44).

8. Ensemble d'outil de coupe (10) selon les revendications 4 ou 5, dans lequel le corps d'outil (12) est fabriqué en carbure cémenté.

9. Ensemble d'outil de coupe (10) selon la revendication 8, dans lequel le manchon cylindrique (94) est monté dans le corps d'outil (12) par une technique d'ajustage par contraction à chaud.

10. Ensemble d'outil de coupe (10) selon la revendication 8, dans lequel le manchon cylindrique (94) est monté dans le corps d'outil (12) par brasage.

11. Ensemble d'outil de coupe (10) selon l'une quelconque des revendications précédentes, dans lequel la tête de coupe (20) est faite de carbure cémenté.
